# EUROPÄISCHE PATENTSCHRIFT

(11) **EP 0 499 036 B1**
(45) Veröffentlichungstag und Bekanntmachung des Hinweises auf die Patenterteilung: **02.03.1994**
(21) Anmeldenummer: 92100565.8
(22) Anmeldetag: 15.01.1992
(51) Int. Cl.: B62D 1/18

(54) **Axial verstellbare Lenksäule für Fahrzeuge**
Axially adjustable steering column
Colonne de direction réglable axialement

(30) Priorität: 06.02.1991 DE 4103548
(43) Veröffentlichungstag der Anmeldung: 19.08.1992
(73) Patentinhaber: MERCEDES-BENZ AG, 70327 Stuttgart (DE)
(72) Erfinder: Peitsmeier, Karl, W-7148 Aldingen (DE); Täuber, Herbert, W-7000 Stuttgart 80 (DE); Teichmann, Jürgen, W-7152 Aspach 1 (DE); Schuliers, Wolfgang, W-7056 Weinstadt 1 (DE)

(56) Entgegenhaltungen:
- DE-A- 2 610 139
- DE-A- 3 409 988
- DE-B- 1 555 465
- DE-C- 3 808 271

## Beschreibung

Die Erfindung betrifft eine axial verstellbare Lenksäule für Fahrzeuge gemäß dem Oberbegriff des Patentanspruchs 1.

Aus der DE-PS 26 10 139 ist eine axial verstellbare Lenksäule für Fahrzeuge bekannt, bei der die teleskopartig gegeneinander verstellbaren Mantelrohrteile mittels einer Klemmverbindung aneinander festlegbar sind, die einen radial zur Längsachse der Mantelrohrteile bewegbaren Gewindezapfen aufweist, der am äußeren Mantelrohrteil in einem Gewindeabschnitt gelagert und durch seine Verdrehung am innenliegenden Mantelrohrteil kraftschlüssig festlegbar ist. Die Verdrehung des Gewindezapfens erfolgt durch ein auf ihn aufgesetztes Handrad.

Bei einer Handbetätigung des Gewindezapfens bekommt eine die axiale Lage der Lenksäule verstellende Person durch die Drehung des Gewindezapfens keine Information, wie weit sie das Handrad zu drehen hat, bis der Gewindezapfen weit genug gelöst oder stark genug festgedreht ist. Es bleibt also nach der Arretierung des verschiebbaren Mantelrohrteiles das unangenehme Gefühl, nicht zu wissen, ob sich die Arretierung vielleicht demnächst z. B. durch Vibrationen wieder selbsttätig löst. Dies ist vor allem dann möglich, wenn der Gewindezapfen in seiner eine Druckkraft aufbringenden eingedrehten Lage nicht durch die Einwirkung einer weiteren Kraft am Losdrehen gehindert ist.

Die DE-OS 34 09 988 zeigt eine axial verstellbare Lenksäule mit zwei Rohren, deren Bewegung relativ zueinander durch eine handbetätigbare Verriegelung unterbunden werden kann. Bei der Entriegelung wirkt hier ein Handhebel über einen Seilzug auf einen Keilkörper, der dadurch einen Sperrzahn aus einer Gegenverzahnung bewegt. Eine Feder zieht den Keilkörper selbsttätig in seine Sperrlage zurück, der ansonsten keine Abstützung in seiner Verriegelungsposition findet, die gegen seine Verschiebung in die Entriegelungsstellung wirkt.

Der Erfindung liegt die Aufgabe zugrunde, eine gattungsgemäße Klemmverbindung einfach zu lösen und in ihrer Klemmstellung zu sichern.

Die Aufgabe wird durch die kennzeichnenden Merkmale des Anspruchs 1 gelöst.

Mit einem Seilzug, der auf einen Gewindezapfen drehend einwirkt, welcher damit zwei Mantelrohrteile zueinander kraftschlüssig festlegt, ist es möglich, auf den Gewindezapfen in seiner Löse- und in seiner Verriegelungsstellung weiterhin fixierend einzuwirken. Die Betätigung des Gewindezapfens kann dabei auch von einem von der Klemmvorrichtung entfernteren Ort vorgenommen werden.

Damit ein den Seilzug mit dem Gewindezapfen verbindendes Zapfenanschlußteil schnell in seiner richtigen Position, in der das Zapfenanschlußteil zumindest teilweise vom Seilzug umschlungen und der Seilzug gespannt ist, auf dem Gewindezapfen positioniert werden kann, ist das Zapfenanschlußteil als aufsetzbare Kappe ausgebildet, die durch eine innenliegende Verzahnung in mehreren Positionen auf dem mit einer passenden Verzahnung versehenen Gewindezapfen formschlüssig plazierbar ist.

Der Gewindezapfen wirkt in seiner Verriegelungsstellung mit relativ hoher Kraft auf das innenliegende Mantelrohrteil. Deshalb ist bei seiner Losdrehung auch das erforderliche Drehmoment hoch, weswegen bei einer mechanischen Betätigung des Seilzugs auch hohe Betätigungskräfte notwendig werden. Darum wird der Gewindezapfen radial in zwei Abschnitte unterteilt, zwischen denen in Axialrichtung ein Wälzlager liegt, das eine Verdrehung der Abschnitte gegeneinander ermöglicht, und somit zuerst der mit dem Seilzug wirkverbundene Abschnitt im Wälzlager losgedreht, und der am innenliegenden Mantelrohrteil anliegende Abschnitt durch den losgedrehten Abschnitt in Axialrichtung angehoben werden kann.

Ein Betätigungsschalter als Zugbetätigung, der zwei Fixstellungen aufweist, nimmt einer bedienenden Person die Möglichkeit einer unbewußten Fehlbedienung der Klemmvorrichtung, da die gelöste und die verriegelnde Position des Gewindezapfens durch diese Fixstellungen vorgegeben werden kann.

In der Klemmvorrichtung können mehrere Gewindezapfen vorgesehen sein, um z. B. die Klemmkraft zu erhöhen. Hierbei kann der Seilzug gespannt nacheinander zu den Gewindezapfen verlaufen und jeweils mit diesen zugverbunden sein, wodurch die Gewindezapfen gleichzeitig und in gleichem Maße verdrehbar sind.

Um den Gewindezapfen sicher in seiner Verriegelungsstellung zu halten, ist es vorteilhaft, ihn fortdauernd durch ein Moment in Verriegelungsrichtung zu belasten, was durch eine Zugfeder zu verwirklichen ist, die über einen Seilzug, der das Zapfenanschlußteil zumindest teilweise umschlingt, mit dem Gewindezapfen verbunden ist, und die am äußeren Mantelrohrteil gelagert ist. Bei einem einzelnen Gewindezapfen kann die Zugfeder am einer Zugbetätigung entgegengesetzten Ende des Seilzugs direkt befestigt sein. Sollte die Klemmvorrichtung mehrere Gewindezapfen aufweisen, so ist es besser, ein Zugseil für die gemeinsame Losdrehung der Gewindezapfen vorzusehen, und für deren Verriegelungsbeaufschlagung jeweils ein getrenntes Zugseil mit einer extra Zugfeder anzuschließen, welche etwa die gleiche Verriegelungskraft auf jeden Gewindezapfen aufbringen können.

Diese Klemmvorrichtung kann ebenso zur Spielfreimachung zweier Mantelrohrteile dienen, bei denen für ihre Verschiebung ein gewisses Spiel zwischen den Mantelrohrwänden notwendig ist, und die für ihre Festlegung eine andere, in beliebiger Weise ausgebildete Arretiervorrichtung aufweisen. Hierbei kann der Seilzug, der auf die Gewindezapfen wirkt, gleichzeitig auch ein Betätigungsteil der Arretiervorrichtung beaufschlagen, wodurch die Arretierung und die Spielfreimachung der Mantelrohrteile synchron vorgenommen werden kann.

Ein Ausführungsbeispiel der Erfindung ist in der Zeichnung dargestellt.

Es zeigen:
- Fig. 1:: in Ansicht einen Abschnitt einer axial verstellbaren Lenksäule mit einer Arretiervorrichtung und zwei mit einem Seilzug betätigten Gewindezapfen zur Spielfreimachung,
- Fig. 2:: Fig. 1 in Seitenansicht zusätzlich mit einem Betätigungsschalter, und
- Fig. 3:: im Querschnitt entlang der Linie III-III in Fig. 1 eine weitere Ausbildungsform eines Gewindezapfens

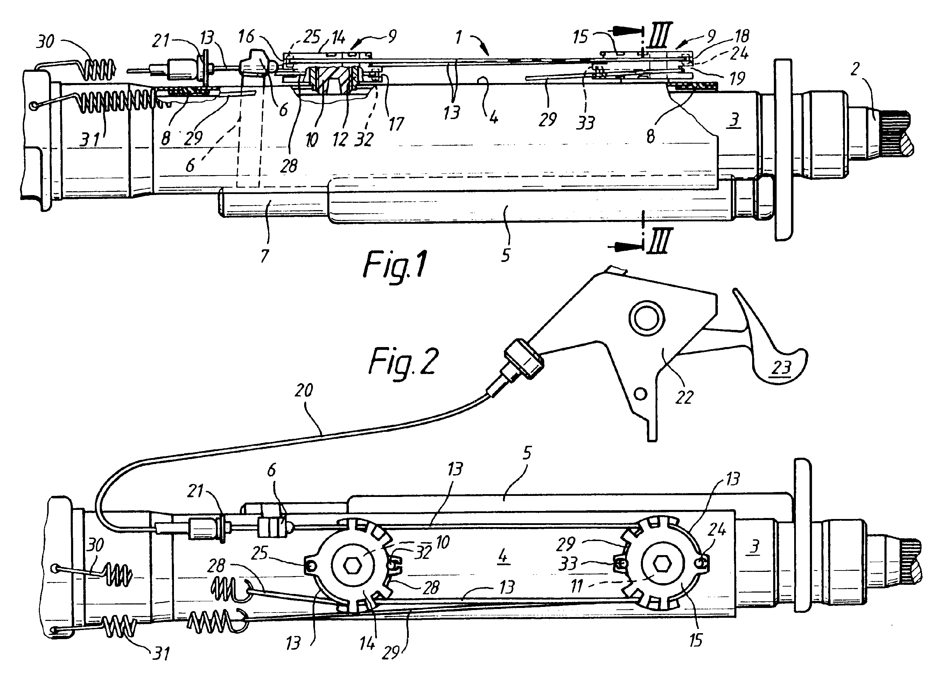

In Fig. 1 und Fig. 2 ist ein Abschnitt einer axial verstellbaren Lenksäule 1 dargestellt, die eine axial verstellbare Lenkwelle 2 aufweist, welche von zwei Mantelrohrteilen 3 und 4 umgeben ist, die bei der axialen Verschiebung der Lenkwelle 2 teleskopartig zusammen oder auseinander gezogen werden können. Um die Position der Lenkwelle 2 zusammen mit der Lage der Mantelrohrteile 3, 4 zu fixieren, ist eine Arretiervorrichtung 5 vorgesehen, die hier durch eine parallel zu den Mantelrohrteilen 3, 4 ausgerichtete hydraulische Kolben-Zylinder-Einheit gebildet ist, welche mit je einem Ende an einem Mantelrohrteil 3 bzw. 4 festgelegt ist, und an welcher ein Betätigungsteil 6 angreift, durch dessen Wirkung die Kolbenstange 7 ein- oder ausfahrbar ist.

Das innenliegende Mantelrohrteil 3 ist in Führungen 8 des äußeren Mantelrohrteils 4 verschiebbar, welche dafür einen geringen Spalt zum innenliegenden Mantelrohrteil 3 aufweisen müßen. Da dadurch das innenliegende Mantelrohrteil 3 auch nach seiner Arretierung nicht vollständig unbeweglich im äußeren Mantelrohrteil 4 liegt, sind die Mantelrohrteile 3, 4 durch eine Klemmverbindung 9 aneinander festlegbar, die der Spielfreimachung der beiden Mantelrohrteile 3, 4 dient. Die Klemmverbindung 9 umfaßt zwei Gewindezapfen 10, 11, die radial zur Längsachse der Mantelrohrteile 3, 4 bewegbar in einem am äußeren Mantelrohrteil 4 festgelegten und dieses durchgreifenden Gewindeabschnitt 12 gelagert sind. Bei der Eindrehbewegung der Gewindezapfen 10, 11 werden diese axial gegen das innere Mantelrohrteil 3 verschoben und auf dieses gedrückt, wodurch die Mantelrohrteile 3 und 4 gegeneinander verspannt werden und bewegungslos aneinander festliegen. Nach dem Zurückdrehen der Gewindezapfen 10, 11 sind die Mantelrohrteile 3, 4 nach dem Lösen der Arretiervorrichtung 5 wieder frei gegeneinander verschiebbar.

Um die Verdrehung der Gewindezapfen 10, 11 in die Löse- oder die Verriegelungsstellung zu steuern, und um die Gewindezapfen 10, 11 dann in einer dieser Stellungen festzuhalten, wirkt auf die Gewindezapfen 10, 11 ein Seilzug 13, der diese um ihre Längsachse dreht, indem er mit diesen über je ein, an den Gewindezapfen 10, 11 festgelegtes Zapfenanschlußteil 14 bzw. 15 verbunden ist, welche der Seilzug 13 zumindest teilweise umschlingt.

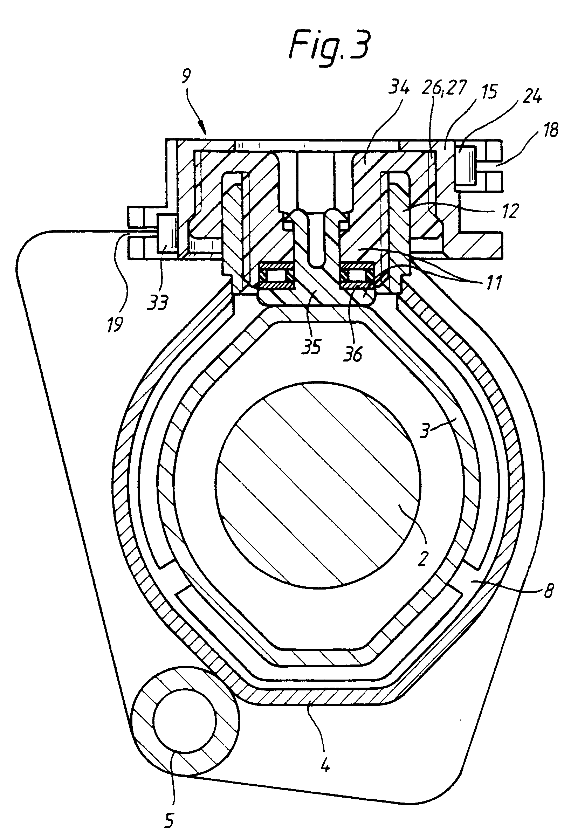

Die Zapfenanschlußteile 14, 15 weisen zwei axial übereinanderliegende kreisförmige Umfangsrillen 16, 17 bzw. 18, 19 auf. In den vom äußeren Mantelrohr 4 entfernter liegenden Umfangsrillen 16 bzw. 18 ist der Seilzug 13 geführt. Die kreisförmige Anlagefläche in den Umfangsrillen 16,17,18,19 führt zu einer gleichförmigen Bewegung des Seilzugs 13. Der Durchmesser der Umfangsrillen 16,17 bzw. 18, 19 beeinflußt als Hebelarm das zur Drehung der Gewindezapfen 10, 11 notwendige Moment. Der Seilzug 13 ist an einem Ende als Bowdenzug 20 ausgebildet, dessen Hülle an einer Anlage 21 am äußeren Mantelrohr 4 abgestützt ist, und der mit einer Zugbetätigung 22 verbunden ist. Die Zugbetätigung 22 weist einen Betätigungsschalter 23 auf, der zwei Fixstellungen einnimmt und bei dieser Bewegung den Seilzug 13 mit sich zieht.
Dadurch nimmt auch der Seilzug 13 zwei Stellungen gegenüber den Gewindezapfen 10, 11 ein. Der Seilzug 13 ist zuerst um das entfernter von der Anlage 21 liegende Zapfenanschlußteil 15 des Gewindezapfens 11 in der Umfangsrille 18 geführt, wo es über einen Verbindungsbolzen 24 eingehakt ist, und ist dann zurück zum anderen Zapfenanschlußteil 14 gelenkt, wo sein Ende, nach einer Viertelkreis-Umschlingung der oberen Umfangsrille 16 ebenfalls mit einem Verbindungsbolzen 25 eingehakt ist. Bei einer Betätigung des Betätigungsschalters 23 (in Fig. 2 Schwenkung nach unten) wird der Seilzug 13 gezogen, und dreht dabei die Gewindezapfen 11 und 10 durch die Verbindungsbolzen 24 und 25 aus der dargestellten Verriegelungsstellung in eine etwa um 45 Grad zurückgedrehte Lösestellung, in der die Gewindezapfen 10,11 nicht mehr auf dem inneren Mantelrohrteil 3 aufsitzen. Damit der Seilzug 13 gespannt von der Anlage 21 bis zu den beiden Zapfenanschlußteilen 14, 15 verläuft, und dort im richtigen Winkel positioniert werden kann und trotzdem einfach an den Zapfenanschlußteilen 14, 15 zu montieren ist, sind die Zapfenanschlußteile 14, 15 als Kappe ausgebildet, welche über eine, in Fig. 3 sichtbare Verzahnung 26 in verschiedenen Drehpositionen auf einer Außenverzahnung 27 der Gewindezapfen 10, 11 plazierbar ist. Durch eine Verstellbewegung des Seilzugs 13 werden die Gewindezapfen 10, 11 gleichzeitig und in gleichem Maße verstellt.

In dieser Lenksäule 1 sind zwei Gewindezapfen 10, 11 angeordnet, die ungefähr mit gleich großer Kraft die Mantelrohrteile 3, 4 gegeneinander verspannen sollen. Deshalb ist für jeden Gewindezapfen 10, 11 getrennt ein Seilzug 28 bzw. 29 vorgesehen, die über eine Zugfeder 30 bzw. 31 am äußeren Mantelrohrteil 4 festgelegt sind, und welche über Verbindungsbolzen 32 bzw. 33 derart an den Zapfenanschlußteilen 14 bzw. 15 eingehakt sind, daß jeder Seilzug 28 bzw. 29 in Verriegelungsrichtung auf seinen Gewindezapfen 10 bzw. 11 einwirkt. Der Seilzug 28 umschlingt die untere Umfangsrille 17 des Zapfenanschlußteils 14 in jeder möglichen Position zumindest teilweise und ist durch den Verbindungsbolzen 32 mit diesem verbunden. Ebenso ist der Seilzug 29 über den Verbindungsbolzen 33 am Zapfenanschlußteil 15 in der unteren Umfangsrille 19 festgelegt. Diese Seilzüge 28 und 29 versuchen also, die Gewindezapfen 10 bzw. 11 in ihre Verriegelungsstellung zu bringen, und werden nur durch den Einfluß des betätigten Seilzugs 13 daran gehindert. Prinzipiell könnte die Löse- und Verriegelungsposition der Gewindezapfen 10 bzw. 11 auch nur durch einen Seilzug erreicht werden, der an beiden Enden durch eine Zugkraft beaufschlagt wäre.

In diesem Ausführungsbeispiel wird der Seilzug 13 ebenfalls dazu genutzt, die Arretiervorrichtung 5 zu betätigen, deren Betätigungsteil 6 am Seilzug 13 befestigt ist, wodurch die Arretierung und die Spielfreimachung der Mantelrohrteile 3, 4, sowie die dazugehörige Umkehrbewegung synchron vorgenommen wird.

Ein Gewindezapfen wirkt in seiner Verriegelungsstellung mit relativ hoher Kraft auf das innenliegende Mantelrohrteil. Deshalb ist bei seiner Losdrehung auch das erforderliche Drehmoment hoch, weswegen bei einer mechanischen Betätigung des Seilzugs auch hohe Betätigungskräfte notwendig werden würden. Um dies zu vermeiden kann z. B. der Gewindezapfen 11, wie in Fig. 3 dargestellt, radial in zwei Abschnitte 34, 35 unterteilt werden, zwischen denen in Axialrichtung ein Wälzlager 36 liegt, das eine Verdrehung der Abschnitte 34, 35 relativ zueinander ermöglicht. Somit wird bei der Lösebewegung des Gewindezapfens 11 im Gegenuhrzeigersinn zuerst der mit dem Seilzug 13 wirkverbundene Abschnitt 34 im Wälzlager 36 losgedreht, und der am innenliegenden Mantelrohrteil 3 anliegende Abschnitt 35 durch den losgedrehten Abschnitt 34 anschließend in Axialrichtung angehoben.

## Patentansprüche

1. Axial verstellbare Lenksäule für Fahrzeuge mit einer axial verschiebbaren Lenkwelle, die von zwei teleskopartig zusammenschiebbaren Mantelrohrteilen (3,4) umgeben ist, die mittels einer Klemmverbindung aneinander festlegbar und bei gelöster Klemmverbindung mit dem Verschieben der Lenkwelle relativ zueinander axial bewegbar sind, wobei die Klemmverbindung (9) zumindest einen radial zur Längsachse der Mantelrohrteile bewegbaren Gewindezapfen (10 bzw. 11) aufweist, der am äußeren Mantelrohrteil (4) in einem Gewindeabschnitt (12) aufgenommen ist und nach seiner Eindrehbewegung gegen das innenliegende Mantelrohrteil (3) drückt,
**dadurch gekennzeichnet,**
daß ein federbelasteter Seilzug (13,28 bzw. 13,29) vorgesehen ist, der auf den Gewindezapfen (10 bzw. 11) verdrehend einwirkt, und daß der Seilzug (13,28,29) dazu ein Zapfenanschlußteil (14 bzw. 15) am Gewindezapfen (10 bzw. 11), an einem kreisförmigen Querschnitt zumindest einen Kreisbogenabschnitt weit anliegend, umgibt.

2. Axial verstellbare Lenksäule nach Anspruch 1,
**dadurch gekennzeichnet,**
daß der Seilzug (13,28,29) am Zapfenanschlußteil (14 bzw. 15) einhakbar ist, und daß der Gewindezapfen (10, 11) als Zapfenanschlußteil (14 bzw. 15) eine Kappe trägt, die über eine Verzahnung (26/27) in mehreren Drehpositionen auf dem Gewindezapfen (10 bzw. 11) formschlüssig festlegbar ist.

3. Axial verstellbare Lenksäule nach Anspruch 1,
**dadurch gekennzeichnet,**
daß der Gewindezapfen (11) radial in zwei Abschnitte (34, 35) unterteilt ist, die in Axialrichtung über ein Wälzlager (36) aneinanderliegen.

4. Axial verstellbare Lenksäule nach Anspruch 1,
**dadurch gekennzeichnet,**
daß an einem Ende des Seilzugs (13) eine Zugbetätigung (22) vorgesehen ist, die einen Betätigungsschalter (23) mit zwei Fixstellungen umfaßt.

5. Axial verstellbare Lenksäule nach einem der Ansprüche 1 oder 2,
**dadurch gekennzeichnet,**
daß der Seilzug (13) gespannt nacheinander zu mehreren Gewindezapfen (11, 10) verläuft und mit diesen zugverbunden ist.

6. Axial verstellbare Lenksäule nach einem der Ansprüche 1 oder 5 ,
**dadurch gekennzeichnet,**
daß für jeden Gewindezapfen (10, 11) ein Seilzug (28 bzw. 29) mit einer Zugfeder (30 bzw. 31) vorgesehen ist, welche den Gewindezapfen (10 bzw. 11) in Verriegelungsrichtung beaufschlägt.

7. Axial verstellbare Lenksäule nach Anspruch 1,
**dadurch gekennzeichnet,**
daß an den Mantelrohrteilen (3, 4) eine Arretiervorrichtung (5) angreift, und daß Gewindezapfen (10, 11) die Mantelrohrteile (3, 4) bei deren Arretierung zur Spielfreimachung zusätzlich gegeneinander verspannen.

8. Axial verstellbare Lenksäule nach Anspruch 7,
**dadurch gekennzeichnet,**
daß am Seilzug (13) ein Betätigungsteil (6) der Arretiervorrichtung (5) angelenkt ist, und dadurch mit den Gewindezapfen (10, 11) synchron betätigbar ist.

## Claims

1. Axially adjustable steering column for vehicles having an axially displaceable steering shaft which is surrounded by two steering column jacket parts (3, 4) which can be pushed together in a telescopic fashion and which can be attached to one another by means of a clamp connection and are axially movable with respect to one another when the clamp connection is released with the displacement of the steering shaft, the clamp connection (9) having at least one threaded pin (10 and 11, respectively) which is radially movable with respect to the longitudinal axis of the steering column parts and is received on the outer steering column jacket part (4) in a threaded section (12) and after its screwing-in movement presses against the internal steering column jacket part (3), characterized in that a spring-loaded control cable (13, 28 and 13, 29, respectively) is provided which acts in a rotating fashion on the threaded pin (10 and 11, respectively), and in that the control cable (13, 28, 29) surrounds, for this purpose, a pin connecting part (14 and 15, respectively) on the threaded pin (10 and 11, respectively) resting against a circular cross-section at least over a distance of one arcuate section.

2. Axially adjustable steering column according to Claim 1, characterized in that the control cable (13, 28, 29) can be coupled on the pin connecting part (14 and 15, respectively), and in that the threaded pin (10, 11) bears a cap as a pin connecting part (14 and 15, respectively) which cap can be attached via a toothing (26/27) in a plurality of turning positions on the threaded pin (10 and 11, respectively) in a positively engaging manner.

3. Axially adjustable steering column according to Claim 1, characterized in that the threaded pin (11) is divided into two sections (34, 35) which rest against one another in the axial direction by means of a roller bearing (36).

4. Axially adjustable steering column according to Claim 1, characterized in that a pull actuation (22) which surrounds an actuation switch (23) with two fixed positions is provided at one end of the control cable (13).

5. Axially adjustable steering column according to one of Claims 1 or 2, characterized in that the control cable (13) runs, in succession, under tension to a plurality of threaded pins (11, 10) and is connected in tensile fashion to the latter.

6. Axially adjustable steering column according to one of Claims 1 or 5, characterized in that a control cable (28 and 29, respectively) with a tension spring (30 and 31, respectively) is provided for each threaded pin (10, 11,), which spring acts on the threaded pin (10 and 11, respectively) in the locking direction.

7. Axially adjustable steering column according to Claim 1, characterized in that a locking device (5) engages on the steering column jacket parts (3, 4), and in that threaded pins (10, 11) tension the steering column jacket parts (3, 4) additionally with respect to one another during their locking in order to eliminate play.

8. Axially adjustable steering column according to Claim 7, characterized in that an actuation part (6) of the locking device (5) is coupled to the control cable (13) and can thus be actuated synchronously with the threaded pins (10, 11).

## Revendications

1. Colonne de direction réglagle axialement pour véhicules, comportant un arbre de direction déplaçable axialement, qui est entouré par deux parties tubulaires d'entourage (3, 4) déplaçables l'une dans l'autre télescopiquement, qui peuvent être fixées l'une avec l'autre au moyen d'une liaison de blocage et qui, lorsque cette liaison de blocage est desserrée, sont déplaçables axialement l'une par rapport à l'autre avec la translation de l'arbre de direction, la liaison de blocage (9) comportant au moins une douille filetée (10 ou 11), déplaçable radialement par rapport à l'axe longitudinal des parties tubulaires d'entourage, qui est reçue dans un trou fileté (12) prévu dans la partie tubulaire extérieure d'entourage (4) et qui, après son mouvement de vissage, exerce une pression contre la partie tubulaire intérieure d'entourage (3), caractérisée en ce qu'il est prévu une commande à câble (13, 28 ou 13, 29) sollicitée par ressort, qui agit en rotation sur la douille filetée (10 ou 11) et en ce que la commande à câble (13, 28, 29) entoure ainsi une partie de raccordement de douille (14 ou 15) prévue sur la douille filetée ( 10 ou 11), en s'appliquant au moins sur un arc de cercle sur une section de forme circulaire.

2. Colonne de direction réglagle axialement selon la revendication 1, caractérisée en ce que la commande à câble (13, 28, 29) peut être accrochée sur la partie de raccordement de douille (14 ou 15) et en ce que la douille filetée (10, 11) porte, comme partie de raccordement de douille (14 ou 15), un chapeau, qui peut être fixé avec conjugaison de formes, par l'intermédiaire d'une denture (26/27), dans différentes positions angulaires sur la douille filetée (10 ou 11).

3. Colonne de direction réglagle axialement selon la revendication 1, caractérisée en ce que la douille filetée (11) est divisée radialement en deux parties (34, 35), qui s'appliquent l'une contre l'autre dans une direction axiale par l'intermédiaire d'un roulement (36).

4. Colonne de direction réglagle axialement selon la revendication 1, caractérisée en ce qu'il est prévu à une extrémité de la commande à câble (13) un dispositif d'actionnement (22) qui comprend un organe d'actionnement (23) comportant deux positions de fixation.

5. Colonne de direction réglagle axialement selon une des revendications 1 ou 2, caractérisée en ce que la commande à câble (13) passe lorsqu'elle est tendue successivement autour de plusieurs douilles filetées (11, 10) et est reliée en traction avec celles-ci.

6. Colonne de direction réglagle axialement selon une des revendications 1 ou 5, caractérisée en ce qu'il est prévu pour chaque douille filetée (10, 11) une commande à câbles (28 ou 29) comportant un ressort de traction (30 ou 31), qui sollicite la douille filetée (10 ou 11) dans le sens de verroullage.

7. Colonne de direction réglagle axialement selon la revendication 1, caractérisée en ce que sur les parties tubulaires d'entourage (3, 4) agit un dispositif d'arrêt (5) et en ce que des douilles filetées (10, 11) serrent additionnellement l'une contre l'autre les parties tubulaires d'entourage (3, 4) lors de leur arrêt en vue d'établir du jeu.

8. Colonne de direction réglagle axialement selon la revendication 7, caractérisée en ce que sur la commande à câble (13) est articulée une partie d'actionnement (6) du dispositif d'arrêt (5), qui peut ainsi être actionné en synchronisme avec les douilles filetées (10, 11).
